# FASCICULE DE BREVET EUROPEEN

(11) **EP 4 061 563 B1**
(45) Date de publication et mention de la délivrance du brevet: **03.01.2024**
(21) Numéro de dépôt: 20821332.2
(22) Date de dépôt: 18.11.2020
(51) Int. Cl.: B22F 3/105, C22C 21/06, C22C 1/04, B33Y 80/00, B33Y 70/00, B33Y 10/00, B22F 10/00

(54) **PROCÉDÉ DE FABRICATION D'UNE PIÈCE EN ALLIAGE D'ALUMINIUM**
VERFAHREN ZUR HERSTELLUNG EINES ALUMINIUMLEGIERUNGSTEILS
PROCESS FOR MANUFACTURING AN ALUMINUM ALLOY PART

(30) Priorité: 19.11.2019 FR 1912915
(43) Date de publication de la demande: 28.09.2022
(73) Titulaire: C-Tec Constellium Technology Center, 38341 Voreppe (FR)
(72) Inventeur: CHEHAB, Bechir, 38500 Voiron (FR); ALTENBEREND, Jochen, 38000 Grenoble (FR); SHAHANI, Ravi, 38340 Voreppe (FR)
(74) Mandataire: Constellium - Propriété Industrielle
(86) Numéro de dépôt international: PCT/FR2020/052107
(87) Numéro de publication internationale: WO 2021/099735

(56) Documents cités:
- EP-A1- 2 127 782
- EP-A1- 2 799 165
- WO-A1-2018/009359
- WO-A1-2018/185259
- JP-A- 2017 218 609
- US-A1- 2019 194 781
- MA RULONG ET AL: "Effect of bimodal microstructure on the tensile properties of selective laser melt Al-Mg-Sc-Zr alloy", JOURNAL OF ALLOYS AND COMPOUNDS, ELSEVIER SEQUOIA, LAUSANNE, CH, vol. 815, 24 septembre 2019 (2019-09-24), XP085946412, ISSN: 0925-8388, DOI: 10.1016/J.JALLCOM.2019.152422 [extrait le 2019-09-24]

## Description

### DOMAINE TECHNIQUE

Le domaine technique de l'invention est un procédé de fabrication d'une pièce en alliage d'aluminium, mettant en oeuvre une technique de fabrication additive.

### ART ANTERIEUR

Depuis les années 80, les techniques de fabrication additive se sont développées. Elles consistent à mettre en forme une pièce par ajout de matière, ce qui est à l'opposé des techniques d'usinage, qui visent à enlever de la matière. Autrefois cantonnée au prototypage, la fabrication additive est à présent opérationnelle pour fabriquer des produits industriels en série, y compris des pièces métalliques.

Le terme « fabrication additive » est défini selon la norme française XP E67-001 comme un "ensemble des procédés permettant de fabriquer, couche par couche, par ajout de matière, un objet physique à partir d'un objet numérique". La norme ASTM F2792 (janvier 2012) définit également la fabrication additive. Différentes modalités de fabrication additive sont aussi définies et décrites dans la norme ISO/ASTM 17296-1. Le recours à une fabrication additive pour réaliser une pièce en aluminium, avec une faible porosité, a été décrit dans le document WO2015006447. L'application de couches successives est généralement réalisée par application d'un matériau dit d'apport, puis fusion ou frittage du matériau d'apport à l'aide d'une source d'énergie de type faisceau laser, faisceau électronique, torche plasma ou arc électrique. Quelle que soit la modalité de fabrication additive appliquée, l'épaisseur de chaque couche ajoutée est de l'ordre de quelques dizaines ou centaines de microns.

D'autres méthodes de fabrication additive sont utilisables. Citons par exemple, et de façon non limitative, la fusion ou le frittage d'un matériau d'apport prenant la forme d'une poudre. Il peut s'agir de fusion ou de frittage laser. La demande de brevet US20170016096 décrit un procédé de fabrication d'une pièce par fusion localisée obtenue par l'exposition d'une poudre à un faisceau d'énergie de type faisceau d'électrons ou faisceau laser, le procédé étant également désigné par les acronymes anglosaxons SLM, signifiant "Selective Laser Melting" ou "EBM", signifiant "Electro Beam Melting".

Les propriétés mécaniques des pièces d'aluminium obtenues par fabrication additive dépendent de l'alliage formant le métal d'apport, et plus précisément de sa composition ainsi que des traitements thermiques appliqués suite à la mise en oeuvre de la fabrication additive.

Les alliages d'aluminium au silicium, de type 4xxx, (Al-Si) comportant éventuellement Mg, sont actuellement considérés comme les alliages les plus mâtures pour l'application du procédé SLM. Cependant, ce type d'alliage peut présenter certaines difficultés lors de l'anodisation. De plus, la conductivité, aussi bien thermique qu'électrique, est limitée.

Le document WO2018185259 décrit un alliage, destiné à être utilisé sous la forme d'une poudre, dans un procédé de fabrication additive de type SLM. L'alliage peut notamment contenir de 2 % à 7 % en masse de Mg. Il peut également contenir une fraction massique de Zr comprise de 0 à 1 %.

Le document US20180010216 décrit un alliage destiné à être utilisé sous la forme d'une poudre, dans un procédé de fabrication additive de type SLM. L'alliage peut comporter une fraction massique de Mg comprise de 1 % à 10 %, et de 0.45 % à 3 % de Zr. On note que cet alliage ne comporte pas de fer.

Le document WO2018009359 décrit un alliage d'aluminium, sous forme de poudre, comportant une fraction massique de Mg comprise de 1 à 10 %, ainsi qu'une fraction massique de Zr comprise de 0,3 à 3 %. L'alliage peut également comporter Fe, Cu, mais ces éléments sont alors présents sous la forme d'impuretés inévitables, dont la teneur est inférieure à 500 ppm.

Les inventeurs ont déterminé une composition d'alliage qui, utilisée dans un procédé de fabrication additive, permet d'obtenir des pièces associant de bonnes propriétés mécaniques, et notamment un bon compromis entre l'allongement à la rupture et la limite d'élasticité.

### EXPOSE DE L'INVENTION

Un premier objet de l'invention est un procédé de fabrication d'une pièce comportant une formation de couches métalliques successives, superposées les unes aux autres, chaque couche étant formée par le dépôt d'un métal d'apport, le métal d'apport étant soumis à un apport d'énergie de façon à entrer en fusion et à constituer, en se solidifiant, ladite couche, le procédé étant caractérisé en ce que le métal d'apport est un alliage d'aluminium comportant les éléments d'alliage suivant (% en poids) :
- Mg : 2.0 % - 5.0 % ;
- Zr : 0.5%-1.0%;
- Fe : 0.6 % - 3.0 % ;
- éventuellement Zn : ≤ 0.5 % ;
- éventuellement Cu : ≤ 0.5 % ;
- autres éléments d'alliage au total ≤ 4.0 %, de préférence ≤ 2.0 %, et individuellement ≤ 1.0 %, de préférence ≤ 0.5 % ;
- impuretés : < 0.05 % individuellement, et au total < 0.15 % ;
- reste aluminium.

Parmi les autres éléments d'alliage, citons par exemple Cr, V, Ti, Mo, Ni, W, Nb, Ta, Sc, Hf, Nd, Ce, Co, La, Ag, Mn, Li, Y, Yb, Er, Sn, In, Si, Sb, Sr, Ba, Bi, Ca, P, B et/ou du mischmétal. La fraction massique de chaque autre élément d'alliage, pris individuellement, peut être inférieure ou égal à 1.0 %, voire 500 ppm, voire à 300 ppm, voire à 200 ppm, voire à 100 ppm.

De manière connue de l'homme du métier, la composition du mischmétal est généralement d'environ 45 à 50 % de cérium, 25 % de lanthane, 15 à 20 % de néodyme et 5 % de praséodyme. L'alliage peut être tel qu'il ne comporte pas de Sc, sauf, éventuellement, à l'état d'impureté. Lorsque l'alliage comporte Sc, la fraction massique de Sc est de préférence strictement inférieure à 500 ppm.

L'alliage ne comporte pas de Mn, sauf, éventuellement, à l'état d'impureté Lorsque l'alliage comporte Mn, la fraction massique de Mn est strictement inférieure à 500 ppm.

L'alliage peut être tel qu'il ne comporte pas de Si, sauf, éventuellement, à l'état d'impureté. Lorsque l'alliage comporte Si, la fraction massique de Si est de préférence de moins de 0.2 %, préférentiellement de moins de 0.15 %.

Selon une variante de la présente invention, l'alliage n'est pas un alliage de type AA6xxx selon la classification de l'Aluminum Association.

Le procédé peut comporter les caractéristiques suivantes, prises isolément ou selon les combinaisons techniquement réalisables :
- Mg : 2.0 % - 3.5 % et de préférence Mg : 2.0 % - 3.0 % ;
- Zr : 0.6 % - 1.0 % et de préférence 0.7 % - 0.95 % ;
- Fe : 0.8 % - 1.5 %.

Chaque couche peut notamment décrire un motif défini à partir d'un modèle numérique.

Le procédé peut comporter, suite à la formation des couches, une application d'au moins un traitement thermique. Le traitement thermique peut être ou comporter une détente, un revenu ou un recuit, pouvant par exemple être effectué à une température préférentiellement comprise de 200°C à 500°C. Il peut également comporter une mise en solution et une trempe. Il peut également comporter une compression isostatique à chaud.

Selon un mode de réalisation avantageux, le procédé ne comporte pas de traitement thermique de type trempe suite à la formation des couches. Ainsi, de préférence, le procédé ne comporte pas d'étapes de mise en solution suivie d'une trempe.

Selon un mode de réalisation, le métal d'apport prend la forme d'une poudre, dont l'exposition à un faisceau de lumière ou de particules chargées résulte en une fusion localisée suivie d'une solidification, de façon à former une couche solide. Selon un autre mode de réalisation, le métal d'apport est issu d'un fil d'apport, dont l'exposition à une source de chaleur, telle que par exemple un arc électrique, résulte en une fusion localisée suivie d'une solidification, de façon à former une couche solide.

Un deuxième objet de l'invention est une pièce métallique, obtenue après application d'un procédé selon le premier objet de l'invention à partir d'alliage qui ne comporte pas de Ti.

Un troisième objet de l'invention est un matériau, notamment sous la forme d'une poudre, destiné à être utilisé en tant que matériau d'apport d'un procédé de fabrication additive, caractérisé en ce qu'il est constitué d'un alliage d'aluminium, comportant les éléments d'alliage suivants (% en poids) :
- Mg: 2.0 % - 5.0 % ;
- Zr : 0.5 % - 1.0 % ;
- Fe : 0.6 % - 3.0 % ;
- éventuellement Zn : ≤ 0.5 % ;
- éventuellement Cu : ≤ 0.5 % ;
- autres éléments d'alliage au total ≤ 4.0 %, de préférence ≤ 2.0 %, et individuellement ≤ 1.0 %, de préférence ≤ 0.5 %, les autres éléments d'alliage étant choisis parmi: Cr, V, Mo, Ni, W, Nb, Ta, Sc, Hf, Nd, Ce, Co, La, Ag, Li, Y, Yb, Er, Sn, In, Si, Sb, Sr, Ba, Bi, Ca, P, B et/ou du mischmétal ;
- impuretés : < 0.05 % individuellement, et au total < 0.15 % ;
- reste aluminium.

L'alliage d'aluminium formant le matériau d'apport peut présenter l'une quelconque des caractéristiques décrites en lien avec le premier objet de l'invention.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

### FIGURES

**[****Fig. 1****]** La figure 1 est un schéma illustrant un procédé de fabrication additive de type SLM.
**[****Fig. 2****]** La figure 2 illustre l'évolution d'une température de liquidus en fonction de la fraction massique de Zirconium.
**[****Fig. 3****]** La figure 3 est une géométrie d'éprouvette de test utilisée pour effectuer des essais de traction, l'éprouvette de test étant obtenue à partir d'une première pièce de test.
**[****Fig. 4****]** La figure 4 représente les résultats d'essais de traction effectués sur des éprouvettes de test, élaborées avec un alliage selon l'invention, et des éprouvettes de références, élaborées avec un alliage de référence.
**[****Fig. 5****]** La figure 5 représente une coupe d'une deuxième pièce de test.
**[****Fig. 6****]** La figure 6 montre des images de coupes de deuxièmes pièces de test, après polissage, ces images étant utilisées pour quantifier un niveau de porosité.
**[****Fig. 7A****]** La figure 7A est un profil surfacique tridimensionnel réalisé sur une troisième pièce de test avant électropolissage.
**[****Fig. 7B****]** La figure 7B est un profil surfacique tridimensionnel réalisé sur une troisième pièce de test après électropolissage.
**[****Fig. 8****]** La figure 8 est un schéma illustrant un procédé de fabrication additive de type WAAM.

### EXPOSE DE MODES DE REALISATION PARTICULIERS

Dans la description, sauf indication contraire :
- la désignation des alliages d'aluminium est conforme à la nomenclature de The Aluminum Association ;
- les teneurs en éléments chimiques sont désignées en % et représentent des fractions massiques. La notation x % - y % signifie supérieur ou égal à x % et inférieur ou égal à y %.

Par impureté, on entend des éléments chimiques présents dans l'alliage de façon non intentionnelle.

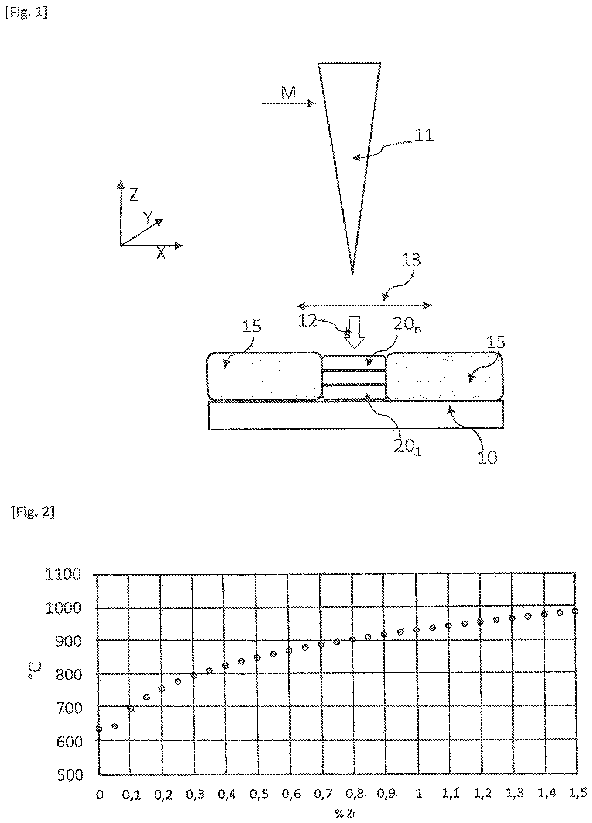

La figure 1 schématise le fonctionnement d'un procédé de fabrication additive de type fusion sélective par laser (Selective Laser Melting ou SLM). Le métal d'apport 15 se présente sous la forme d'une poudre disposée sur un support 10. Une source d'énergie, en l'occurrence une source laser 11, émet un faisceau laser 12. La source laser est couplée au matériau d'apport par un système optique 13, dont le mouvement est déterminé en fonction d'un modèle numérique *M.* Le faisceau laser 12 se propage selon un axe de propagation Z, et suit un mouvement selon un plan XY, décrivant un motif dépendant du modèle numérique. Le plan est par exemple perpendiculaire à l'axe de propagation Z. L'interaction du faisceau laser 12 avec la poudre 15 engendre une fusion sélective de cette dernière, suivie d'une solidification, résultant en la formation d'une couche 20₁...20ₙ. Lorsqu'une couche a été formée, elle est recouverte de poudre 15 du métal d'apport et une autre couche est formée, superposée à la couche préalablement réalisée. L'épaisseur de la poudre formant une couche peut par exemple être comprise de 10 à 200 µm.

La poudre peut présenter au moins l'une des caractéristiques suivantes :
- Taille moyenne de particules de 5 à 100 µm, de préférence de 5 à 25 µm, ou de 20 à 60 µm. Les valeurs données signifient qu'au moins 80 % des particules ont une taille dans la gamme spécifiée ;
- Forme sphérique. La sphéricité d'une poudre peut par exemple être déterminée en utilisant un morphogranulomètre ;
- Bonne coulabilité. La coulabilité d'une poudre peut par exemple être déterminée selon la norme ASTM B213 ou la norme ISO 4490 : 2018. Selon la norme ISO 4490 : 2018, le temps d'écoulement est de préférence inférieur à 50 ;
- Faible porosité, de préférence de 0 à 5 %, plus préférentiellement de 0 à 2 %, encore plus préférentiellement de 0 à 1 % en volume. La porosité peut notamment être déterminée par analyse d'images à partir de micrographies optiques ou par pycnométrie à l'hélium (voir la norme ASTM B923) ;
- Absence ou faible quantité (moins de 10 %, de préférence moins de 5 % en volume) de petites particules (1 à 20 % de la taille moyenne de la poudre), dites satellites, qui collent aux particules plus grosses.

Une telle poudre est particulièrement adaptée à la mise en oeuvre d'un procédé de type SLM. Un tel procédé permet d'obtenir une fabrication, en parallèle, de plusieurs pièces monolithiques, et cela à un coût raisonnable.

Les inventeurs ont mis en oeuvre un procédé de fabrication additive de type SLM pour réaliser des pièces, par exemple destinées à des véhicules ou à des aéronefs. Ces pièces doivent en particulier disposer de bonnes propriétés mécaniques, en particulier du point de vue de la limite d'élasticité ou de l'allongement à la rupture. Elles doivent également présenter une faible sensibilité à la fissuration.

Cependant, les inventeurs ont observé que l'application de traitements thermiques de type trempe pouvaient induire une distorsion de la pièce, du fait de la variation brutale de température. La distorsion de la pièce est généralement d'autant plus significative que ses dimensions sont importantes. Or, l'avantage d'un procédé de fabrication additive est précisément d'obtenir une pièce dont la forme, après fabrication est définitive, ou quasi-définitive. La survenue d'une déformation significative résultant d'un traitement thermique est donc à éviter. Par quasi-définitive, il est entendu qu'un usinage de finition peut être effectué sur la pièce après sa fabrication : la pièce fabriquée par fabrication additive s'étend selon sa forme définitive, à l'usinage de finition près.

Ayant constaté ce qui précède, les inventeurs ont cherché une composition d'alliage, formant le matériau d'apport d'un procédé de fabrication additive, permettant d'obtenir des propriétés mécaniques satisfaisantes, sans nécessiter l'application de traitements thermiques, subséquents à la formation des couches, risquant d'induire une distorsion. Il s'agit notamment d'éviter les traitements thermiques impliquant une variation brutale de la température. Ainsi, l'invention permet d'obtenir, par fabrication additive, une pièce dont les propriétés mécaniques sont satisfaisantes, notamment les propriétés mécaniques de traction (limite d'élasticité, allongement à la rupture) ainsi que la sensibilité à la fissuration. De plus, la pièce résultant de la mise en oeuvre du procédé est compatible avec des traitements électrochimiques de surface, de type anodisation ou électropolissage.

En fonction du type de procédé de fabrication additive choisi, le matériau d'apport peut se présenter sous la forme d'un fil ou d'une poudre.

La composition de l'alliage doit également être compatible avec les spécificités d'un procédé de fabrication additive. Il s'agit en particulier d'avoir une température de liquidus aussi basse que possible, de façon à limiter l'évaporation d'éléments présents dans l'alliage, en particulier Mg.

Une fraction massique de Mg comprise de 2.0 % à 5.0 % permet d'obtenir des propriétés mécaniques satisfaisantes. De préférence, la fraction massique de Mg est inférieure à 3.5 % ou à 3.0 %, de façon à limiter les risques de corrosion intra-granulaire, en particulier lors de l'exposition d'une pièce fabriquée à des températures comprises de 60°C à 200°C. Afin d'obtenir une bonne résistance à la corrosion, il est donc préférable que la fraction massique de Mg soit de préférence comprise de 2.0 % à 3.5 %, la plage optimale étant de 2.0 % à 3.0 %. En dessous de 2.0 %, il est considéré que les propriétés mécaniques ne sont pas suffisantes : en effet, en dessous 2.0 %, on considère qu'il y a un risque accru de fissuration, en particulier en fin de solidification. Ainsi, la fraction massique de Mg est optimisée afin d'obtenir des propriétés mécaniques, tout en limitant les risques liés à la corrosion.

En outre, les inventeurs ont constaté qu'une faible fraction massique de Zr, comprise de 0.5 % à 1.0 %, et de préférence comprise de 0.7 % à 0.95 %, permet d'obtenir des propriétés mécaniques de traction satisfaisante, en particulier l'allongement à la rupture. En outre, la présence de Zr, couplé à un traitement thermique, permet d'améliorer la limite d'élasticité du fait de la formation de précipités Al₃Zr. Une telle fraction massique de Zr permet de maintenir une température de liquidus relativement faible, en dessous de 1000°C. Cela permet de limiter l'évaporation d'éléments volatils, tels que Mg, lorsque l'alliage est soumis à une température supérieure ou égale à sa température de liquidus. Il s'agit notamment :
- de l'étape de préparation de la poudre, au cours de laquelle l'alliage fait l'objet d'une atomisation, de façon à former des gouttelettes d'alliage liquide. Ces dernières sont destinées à se solidifier pour former la poudre ;
- de la mise en oeuvre du procédé de fabrication proprement dit, au cours de laquelle l'alliage subit une fusion localisée sous l'effet de l'exposition au faisceau laser incident.

La fraction massique de Zr est ainsi suffisante pour améliorer les propriétés mécaniques, tout en conférant une température de liquidus suffisamment faible. Cela permet de limiter la température de fabrication de la poudre ou de mise en oeuvre le procédé de fabrication additive.

La figure 2 représente une évolution de la température de liquidus (°C) en fonction de la fraction massique en Zr (en %), pour un alliage d'aluminium comportant 3.0 % de Mg et 1.0 % de Fe. Cette courbe a été obtenue à l'aide du logiciel FactSage 7.1 en utilisant la base de données VLAB fournie avec le logiciel. Elle montre qu'une teneur en Zr inférieure à 1.0 % permet de maintenir la température de liquidus inférieure ou égale à 1000°C.

L'alliage comporte également une fraction massique de Fe comprise de 0.6 % à 3.0 %, et de préférence de 0.8 % à 1.5 %. Une telle fraction massique permet d'obtenir une bonne résistance à la fissuration. La présence de Fe permet également d'augmenter la limite d'élasticité.

De façon optionnelle, l'alliage peut comporter Zn, selon une fraction massique inférieure ou égale à 0.5 %. Cela permet d'augmenter la résistance à la corrosion.

De façon optionnelle, l'alliage peut comporter Cu, selon une fraction massique inférieure ou égale à 0.5 %. Cela permet d'augmenter la résistance à la corrosion.

L'alliage peut comporter Zn et Cu, la fraction massique cumulée étant alors inférieure ou égale à 0.5 %.

L'alliage d'aluminium peut également comporter d'autres éléments d'alliage, tels que par exemple Cr, V, Ti, Mo, W, Nb, Ta, Sc, Zn, Hf, Nd, Ce, Co, La, Ag, Li, Y, Yb, Er, Sn, In, Si, Sb, Sr, Ba, Bi, Ca, P, B et/ou du mischmétal, selon une fraction massique cumulée inférieure ou égale à 4.0 %, de préférence inférieure ou égale à 2.0 %. La fraction massique de chaque autre élément d'alliage pris individuellement est inférieure ou égale à 1.0 %, de préférence inférieure ou égale à 0.5 % Lorsque l'alliage comporte Mn, la fraction massique de Mn est strictement inférieure à 500 ppm.

Parmi les éléments d'alliage précédemment listés, il est préférable que l'alliage ne comporte pas de Sc ou de Mn, ou selon des fractions massiques faibles, de préférence inférieures à 200 ppm ou 100 ppm, ou à l'état d'impureté, c'est-à-dire sans adjonction volontaire.

Outre de bonnes propriétés mécaniques, l'alliage tel que précédemment décrit comporte les avantages suivants :
- une composition pouvant être exempte de matériaux rares, par exemple Sc ou des terres rares ;
- une bonne résistance à la corrosion : en effet, il est considéré que les microstructures rapidement solidifiées et formées à partir d'alliages comportant une faible teneur en métaux de transition (en l'occurrence Zr et Fe) présentent une bonne résistance à la corrosion. Une cause possible est l'absence de grosses particules usuellement désignées "coarse particles" par l'homme du métier ;
- une bonne compatibilité avec des procédés électrochimiques de traitement de surface, en particulier l'anodisation, par l'absence, ou la faible quantité, de Si et la finesse de la microstructure formée suite à la solidification rapide de l'alliage.

Par ailleurs, l'alliage tel que précédemment décrit présente de bonnes propriétés mécaniques sans qu'il soit nécessaire d'appliquer un traitement thermique post-fabrication. Comme décrit par la suite, dans les exemples expérimentaux, l'application d'un traitement thermique, de type revenu ou recuit, permet d'augmenter la limite d'élasticité, au détriment de l'allongement à la rupture.

### Exemples expérimentaux

Des premiers essais ont été réalisés en utilisant un alliage, dont la composition comportait, outre Al ; Mg : 2.7 % ; Zr : 0.76 % ; Fe : 1.0 % ; impuretés : < 0.05 % avec un cumul d'impuretés < 0.15 %. La température de liquidus d'un tel alliage a été estimée à 897°C. A titre de comparaison, un alliage de type Al ; Mg : 3,66 % ; Zr : 1,5 %, tel que décrit dans WO2018009359, présente une température de liquidus de 994°C.

Des pièces de test ont été réalisées par SLM, en utilisant une machine de type EOS 290 SLM (fournisseur EOS). La puissance du laser était de 370 W. La vitesse de balayage était de 1250 mm/s.

L'écart entre deux lignes adjacentes de balayage, usuellement désigné par le terme "écart vecteur", et usuellement désigné en anglais par le terme "hatch distance" était de 0.11 mm. Chaque couche de métal présentait une épaisseur de 60 µm. Le plateau sur lequel reposait la poudre a été chauffé à 200°C.

La poudre utilisée présentait une taille de particule essentiellement comprise de 3 µm à 100 µm, avec une médiane de 29 µm, un fractile à 10 % de 11 µm et un fractile à 90 % de 60 µm. La poudre a été formée à partir d'un lingot d'alliage en mettant en oeuvre un atomiseur Nanoval, à une température de 950°C et une différence de pression de 4 bar. La poudre résultant de l'atomisation a été filtrée en taille, la taille de filtration étant de 90 µm.

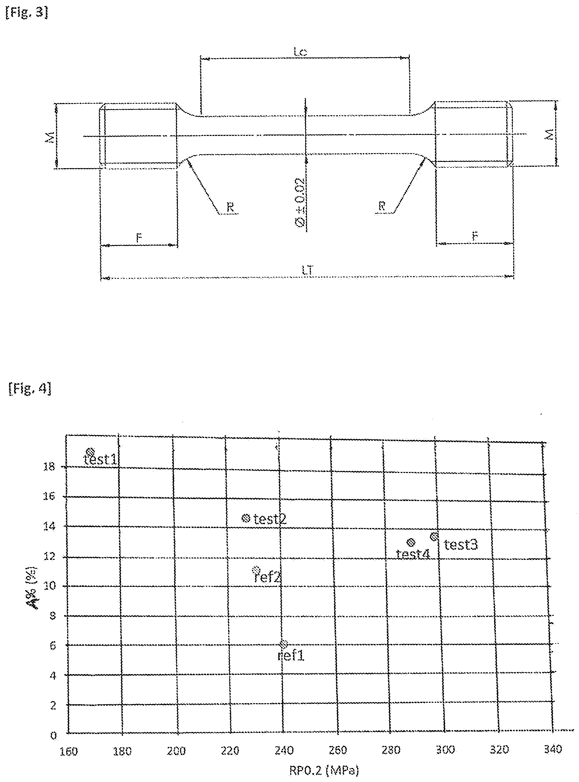

Des premières pièces de test ont été réalisées, sous la forme de cylindre de diamètre 11 mm et de hauteur 46 mm. Les premières pièces de test, cylindriques, ont été usinées pour obtenir des éprouvettes de test cylindriques, destinées à des essais de traction, ayant des dimensions listées dans le tableau 1. La géométrie des éprouvettes de test est représentée sur la Figure 3. Sur la Figure 3 et dans le tableau 1, ∅ représente le diamètre de la partie centrale de l'éprouvette, M la largeur des deux extrémités de l'éprouvette, LT la longueur totale de l'éprouvette, R le rayon de courbure entre la partie centrale et les extrémités de l'éprouvette, Le la longueur de la partie centrale de l'éprouvette et F la longueur des deux extrémités de l'éprouvette. Les valeurs mentionnées dans le tableau 1 sont en millimètre.

**[Tableau 1]**

| **∅** | **M** | **LT** | **R** | **Le** | **F** |
|---|---|---|---|---|---|
| 4 | 8 | 45 | 3 | 22 | 8,7 |

Les éprouvettes de test ainsi obtenues ont été testées en traction à température ambiante selon la norme NF EN ISO 6892-1 (2009-10), de façon à déterminer l'allongement à la rupture (A%) ainsi que la limite d'élasticité Rp0.2. Ces propriétés ont été mesurées parallèlement à la longueur totale LT de chaque éprouvette.

Le tableau 2 rassemble les résultats des essais de traction obtenus avec les éprouvettes de test (test 1, test 2, test 3 et test 4). Pour chaque éprouvette, on a renseigné le traitement thermique effectué, ainsi que l'allongement à la rupture (A%- unité %) et la limite d'élasticité (RP0.2, unité : MPa). Préalablement à l'obtention des éprouvettes, les premières pièces de test ont fait l'objet d'une détente (stress relief) d'une durée de 4h à 300°C.

Les premières pièces de test, à partir desquelles on a usiné les éprouvettes test 2, test 3 et test 4, ont subi un recuit à 400°C de durées respectivement égales à 1h, 4h et 8h. La première pièce de test, à partir de laquelle on a usiné l'éprouvette test 1 n'a pas subi de traitement thermique à la suite de la détente. L'objectif du traitement thermique à 400°C est d'augmenter la limite d'élasticité, en favorisant la formation de précipités Al₃Zr.

On a comparé les résultats obtenus avec des résultats de référence, obtenus en utilisant un alliage de type AlSi10Mg, ces résultats étant disponibles dans la bibliographie, et en particulier consultables sur le site internet de la société EOS Gmbh : https://gpiprototype.com/pdf/EOS_Aluminium_AlSi10Mg_en.pdf. Dans le tableau 2 ci-après, la référence "ref 1" correspond à une absence de traitement thermique, usuellement désigné par le terme "as built". La référence "ref 2" correspond à l'application d'une détente de 2h à 300°C.

**[Tableau 2]**

| Référence | Traitement thermique post fabrication | RP0.2 (mPa) | A% (%) |
|---|---|---|---|
| ref 1 | - | 240 | 6 |
| ref 2 | 300°C - 2h | 230 | 11 |
| test 1 | - | 169 | 19 |
| test 2 | 400°C - 1h | 226.5 | 14.5 |
| test 3 | 400°C - 4h | 296.5 | 13.2 |
| test 4 | 400°C - 8h | 288 | 12.8 |

Les résultats listés dans le tableau 2 sont illustrés sur la figure 4. On observe que les éprouvettes de test présentent un meilleur compromis limite d'élasticité / allongement à la rupture que les valeurs de référence. Les propriétés mécaniques de traction sont supérieures.

Par ailleurs, on observe que sans traitement thermique ("as built"), la limite d'élasticité mesurée sur la première pièce de test est inférieure aux valeurs de référence. Ceci est considéré comme avantageux, car moins propice à l'apparition de fissurations. En effet, le fait de disposer d'un matériau plus mou permet de limiter les contraintes résiduelles, ces dernières pouvant entraîner l'apparition de fissurations.

On observe qu'on obtient des propriétés mécaniques intéressantes, sans qu'il soit nécessaire d'effectuer un traitement de type mise en solution et trempe. Il est rappelé qu'il est préférable d'éviter un tel traitement, de façon à éviter une brusque variation de température, cette dernière pouvant induire une déformation de la pièce fabriquée.

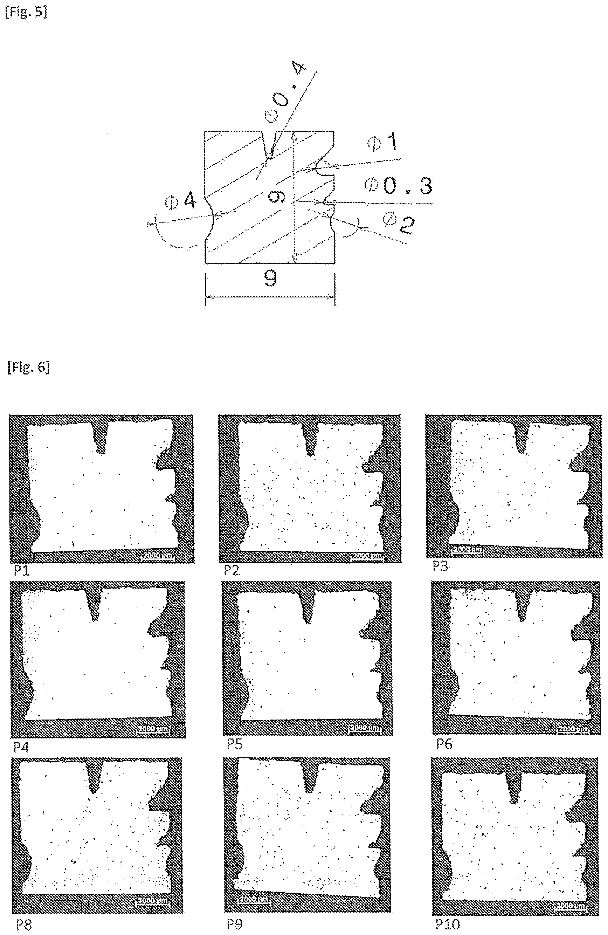

Des deuxièmes pièces de test ont été réalisées, prenant la forme de cubes de dimensions 9 mm x 9 mm x 9 mm. Ces cubes ont fait l'objet d'une gravure de façon à former des rainures, de différents diamètres, destinées à favoriser une fissuration thermique. Des coupes ont été formées, à mi-épaisseur, de façon à évaluer la présence de fissuration au niveau des fentes, ainsi que le niveau de porosité. La figure 5 montre les caractéristiques géométriques de chaque coupe. On a effectué, au niveau de chaque coupe, un polissage au papier abrasif puis une finition avec une pâte diamantée jusqu'à 1 µm.

La tableau 3 représente, pour différents cubes, les paramètres de fabrication (puissance, écart vecteur, vitesse de balayage, taux de déposition, usuellement désigné par le terme "built rate"), ainsi que la porosité (%). Cette dernière a été estimée par analyse d'images des coupes, après polissage, à l'aide du logiciel libre "Image J". Par ailleurs, des analyses au microscope effectuées sur chaque coupe, après polissage, ont confirmé l'absence de fissuration au niveau des fentes. L'alliage proposé par les inventeurs présente donc une faible sensibilité à la fissuration. La figure 6 représente les images de 9 coupes après polissage.

**[Tableau 3]**

| Référence | Puissance (W) | Ecart vecteur (mm) | Vitesse de balayage (mm/s) | Taux de déposition (cm³/h) | Porosité (%) |
|---|---|---|---|---|---|
| P1 | 370 | 0,111 | 1250 | 29,97 | 0,4 |
| P2 | 370 | 0,14 | 1275 | 38,56 | 0,9 |
| P3 | 310 | 0,14 | 1100 | 33,26 | 0,7 |
| P4 | 370 | 0,111 | 1250 | 20,97 | 0,4 |
| P5 | 370 | 0,137 | 1012 | 29,95 | 0,3 |
| P6 | 370 | 0,143 | 1613 | 49,83 | 0,9 |
| P7 | 370 | 0,177 | 1307 | 49,97 | 0,4 |
| P8 | 370 | 0,128 | 1443 | 39,90 | 0,9 |
| P9 | 370 | 0,158 | 1169 | 39,90 | 0,9 |
| P10 | 370 | 0,13 | 1400 | 39,31 | 0,7 |

Un résultat remarquable est l'absence de fissuration, alors que le taux de déposition et la vitesse de balayage sont élevés, et compatibles avec des cadences de production industrielles. L'invention permet de fabriquer rapidement des pièces, sans qu'elles soient affectées par des fissurations. Par ailleurs, ces résultats ont été observés en faisant varier les paramètres de fabrication, notamment la vitesse de balayage et l'écart vecteur. En utilisant l'alliage tel que précédemment décrit, il n'est pas nécessaire de procéder à un ajustement précis des paramètres expérimentaux, pour définir des paramètres optimaux de fabrication réduisant la fissuration.

Les pièces obtenues à partir d'un alliage selon l'invention sont compatibles avec des procédés électrochimiques de traitement de surface, de type anodisation ou électropolissage. Il s'agit d'un avantage important en comparaison des alliages de type Al-Si, ces derniers étant considérés comme peu compatibles avec de tels traitements de surface, et en particulier avec l'électropolissage ou l'anodisation. L'alliage selon l'invention permet alors d'obtenir des pièces avec un bon niveau de finition.

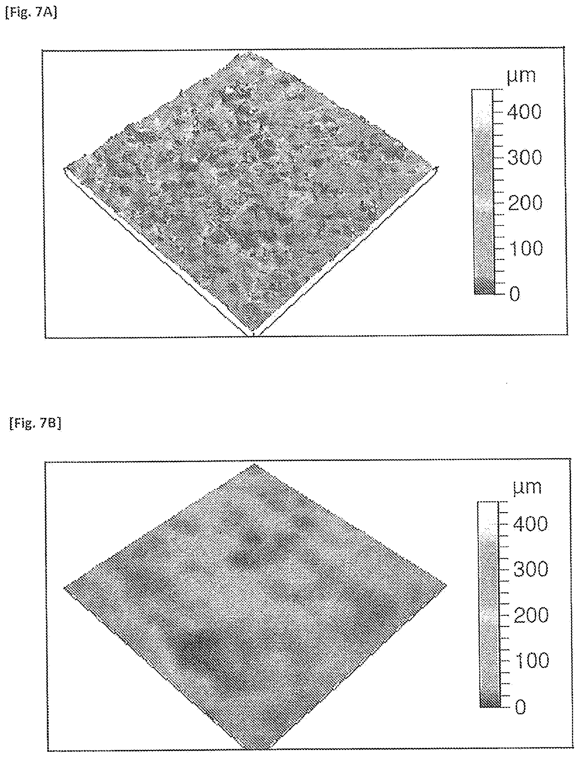

On a réalisé une troisième pièce de test, de forme parallélépipédique, de dimensions 150 mm x 50 mm x 3 mm. La troisième pièce de test a fait l'objet d'un électropolissage. Des profils 3D de surface ont été réalisés respectivement avant et après l'électropolissage, en utilisant un microscope optique Brukers GT3D K1. Les figures 7A et 7B montrent les profils 3D obtenus respectivement avant et après l'électropolissage. Chaque profil a été effectué selon une surface carrée de 4 mm de côté. L'état de surface a été caractérisé notamment par les paramètres suivants : rugosité Ra (écart moyen de rugosité Ra selon la norme DIN NF EN ISO 4287), rugosité Rz (hauteur moyenne de profil Rz selon la norme DIN NF EN ISO 4287) et écart type σ.

Le tableau 4 ci-après présente les résultats obtenus :

**[Tableau 4]**

| | Ra | Rz | σ |
|---|---|---|---|
| avant électropolissage | 15 ± 3 µm | 82 ± 15 µm | 47.9 % |
| après électropolissage | 1.9 ± 0.4 µm | 8.1 ± 1.7 µm | 1.35 % |

On observe que l'électropolissage permet une amélioration significative de l'état de surface.

Selon un mode de réalisation, le procédé peut comporter une compression isostatique à chaud (CIC). Le traitement CIC peut notamment permettre d'améliorer les propriétés d'allongement et les propriétés en fatigue. Il peut également permettre de réduire la porosité. La compression isostatique à chaud peut être réalisée avant, après ou à la place du traitement thermique. Avantageusement, la compression isostatique à chaud est réalisée à une température de 250°C à 500°C et de préférence de 300°C à 450°C, à une pression de 500 à 3000 bars et pendant une durée de 0,5 à 100 heures.

Selon un autre mode de réalisation, adapté aux alliages à durcissement structural, on peut réaliser une mise en solution suivie d'une trempe et d'un revenu de la pièce formée et/ou une compression isostatique à chaud. La compression isostatique à chaud peut dans ce cas avantageusement se substituer à la mise en solution.

Cependant le procédé selon l'invention est avantageux, car il ne nécessite de préférence pas de traitement de mise en solution suivi de trempe. La mise en solution peut avoir un effet néfaste sur la résistance mécanique en favorisant un grossissement des dispersoïdes ou des phases intermétalliques fines.

Selon un mode de réalisation, le procédé selon la présente invention comporte en outre optionnellement un traitement d'usinage, et/ou un traitement de surface chimique, électrochimique ou mécanique, et/ou une tribofinition. Ces traitements peuvent être réalisés notamment pour réduire la rugosité et/ou améliorer la résistance à la corrosion et/ou améliorer la résistance à l'initiation de fissures en fatigue.

Optionnellement, il est possible de réaliser une déformation mécanique de la pièce, par exemple après la fabrication additive et/ou avant le traitement thermique.

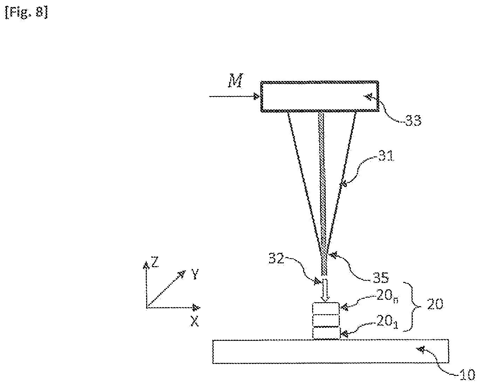

Bien que décrit en lien avec une méthode de fabrication additive de type SLM, le procédé peut être appliqué à d'autres méthodes de fabrication additive de type WAAM, évoqué en lien avec l'art antérieur. La figure 8 représente une telle alternative. Une source d'énergie 31, en l'occurrence une torche, forme un arc électrique 32. Dans ce dispositif, la torche 31 est maintenue par un robot de soudage 33. La pièce 20 à fabriquer est disposée sur un support 10. Dans cet exemple, la pièce fabriquée est un mur s'étendant selon un axe transversal Z perpendiculairement à un plan XY défini par le support 10. Sous l'effet de l'arc électrique 12, un fil d'apport 35 entre en fusion pour former un cordon de soudure. Le robot de soudage est commandé par un modèle numérique *M.* Il est déplacé de façon à former différentes couches 20₁...20ₙ, empilées les unes sur les autres, formant le mur 20, chaque couche correspondant à un cordon de soudure. Chaque couche 20₁...20ₙ s'étend dans le plan XY, selon un motif défini par le modèle numérique *M.*

Le diamètre du fil d'apport est de préférence inférieur à 3 mm. Il peut être compris de 0.5 mm à 3 mm et est de préférence compris de 0.5 mm à 2 mm, voire de 1 mm à 2 mm. Il est par exemple de 1.2 mm.

D'autres procédés sont par ailleurs envisageables, par exemple, et de façon non limitative :
- frittage sélectif par laser (Selective Laser Sintering ou SLS) ;
- frittage direct du métal par laser (Direct Metal Laser Sintering ou DMLS) ;
- frittage sélectif par chauffage (Selective Heat Sintering ou SHS) ;
- fusion par faisceau d'électrons (Electron Beam Melting ou EBM) ;
- dépôt par fusion laser (Laser Melting Deposition) ;
- dépôt direct par apport d'énergie (Direct Energy Déposition ou DED) ;
- dépôt direct de métal (Direct Metal Deposition ou DMD) ;
- dépôt direct par laser (Direct Laser Déposition ou DLD) ;
- technologie de dépôt par Laser (Laser Déposition Technology) ;
- ingénierie de formes nettes par laser (Laser Engineering Net Shaping) ;
- technologie de plaquage par laser (Laser Cladding Technology) ;
- technologie de fabrication de formes libres par laser (Laser Freeform Manufacturing Technology ou LFMT) ;
- dépôt par fusion laser (Laser Metal Deposition ou LMD) ;
- pulvérisation à froid (Cold Spray Consolidation ou CSC) ;
- fabrication additive par friction (Additive Friction Stir ou AFS) ;
- frittage par étincelle au plasma ou frittage flash (Field Assisted Sintering Technology, FAST ou spark plasma sintering) ; ou
- soudage par friction rotative (Inertia Rotary Friction Welding ou IRFW).

## Revendications

1. Procédé de fabrication d'une pièce (20) comportant une formation de couches métalliques successives (20₁...20ₙ), superposées les unes aux autres, chaque couche étant formée par le dépôt d'un métal d'apport (15, 25), le métal d'apport étant soumis à un apport d'énergie de façon à entrer en fusion et à constituer, en se solidifiant, ladite couche, le procédé étant **caractérisé en ce que** le métal d'apport (15, 25) est un alliage d'aluminium ne comportant pas de Mn, sauf éventuellement à l'état d'impureté, et comportant les éléments d'alliage suivants (% en poids) :
- Mg : 2.0 % - 5.0 % ;
- Zr : 0.5 % - 1.0 % ;
- Fe : 0.6 % - 3.0 % ;
- éventuellement Zn : ≤ 0.5 % ;
- éventuellement Cu : ≤ 0.5 % ;
- autres éléments d'alliage, au total ≤ 4 %, et individuellement ≤ 1.0 %, les autres éléments d'alliage étant choisis parmi : Cr, V, Ti, Mo, Ni, W, Nb, Ta, Sc, Hf, Nd, Ce, Co, La, Ag, Li, Y, Yb, Er, Sn, In, Si, Sb, Sr, Ba, Bi, Ca, P, B et/ou du mischmétal ;
- impuretés : < 0.05 % individuellement, et au total < 0.15 % ;
- reste aluminium.

2. Procédé selon l'une quelconque des revendications précédentes, dans lequel Mg : 2.0 % - 3,5 % ou Mg : 2.0 % - 3.0 %.

3. Procédé selon l'une quelconque des revendications précédentes, dans lequel Zr : 0.6 % - 1.0 % et de préférence Zr : 0.7 % - 0.95 %

4. Procédé selon l'une quelconque des revendications précédentes, dans lequel Fe : 0.8 % - 1,5 %.

5. Procédé selon l'une quelconque des revendications précédentes, ne comportant pas de Sc, sauf éventuellement à l'état d'impureté.

6. Procédé selon l'une quelconque des revendications précédentes, dans lequel la fraction massique individuelle de chaque autre élément d'alliage est inférieure à 500 ppm, voire inférieure à 300 ppm, voire inférieure à 200 ppm, voire inférieure à 100 ppm.

7. Procédé selon l'une quelconque des revendications précédentes, comportant, suite à la formation des couches (20₁...20ₙ), une application d'un traitement thermique.

8. Procédé selon la revendication 7, dans lequel le traitement thermique est une détente ou un revenu ou un recuit.

9. Procédé selon l'une quelconque des revendications 7 ou 8, dans lequel le traitement thermique est effectué à une température comprise de 200°C à 500°C.

10. Procédé selon l'une quelconque des revendications précédentes, ne comportant pas de traitement thermique de type trempe suite à la formation des couches.

11. Procédé selon l'une quelconque des revendications précédentes, dans lequel le métal d'apport prend la forme d'une poudre (15), dont l'exposition à un faisceau de lumière (12) ou de particules chargées résulte en une fusion localisée suivie d'une solidification, de façon à former une couche solide (20₁...20ₙ).

12. Procédé selon l'une quelconque des revendications 1 à 10, dans lequel le métal d'apport est issu d'un fil d'apport (25), dont l'exposition à une source de chaleur (22) résulte en une fusion localisée suivie d'une solidification, de façon à former une couche solide (20₁...20ₙ).

13. Pièce métallique obtenue par un procédé objet de l'une quelconque des revendications précédentes, dans laquelle les autres éléments d'alliage sont choisis parmi : Cr, V, Mo, Ni, W, Nb, Ta, Sc, Hf, Nd, Ce, Co, La, Ag, Li, Y, Yb, Er, Sn, In, Si, Sb, Sr, Ba, Bi, Ca, P, B et/ou du mischmétal.

14. Poudre, destinée à être utilisée en tant que matériau d'apport d'un procédé de fabrication additive, **caractérisé en ce qu'**elle est constituée d'un alliage d'aluminium, ne comportant pas de Mn, sauf éventuellement à l'état d'impureté, et comportant les éléments d'alliage suivants (% en poids) :
- Mg : 2.0 % - 5.0 % ;
- Zr : 0.5 % - 1.0 % ;
- Fe : 0.6 % - 3.0 % ;
- éventuellement Zn : ≤ 0.5 % ;
- éventuellement Cu : ≤ 0.5 % ;
- autres éléments d'alliage, au total ≤ 4.0 %, et individuellement ≤ 1.0 %, les autres éléments d'alliage étant choisis parmi : Cr, V, Mo, Ni, W, Nb, Ta, Sc, Hf, Nd, Ce, Co, La, Ag, Li, Y, Yb, Er, Sn, In, Si, Sb, Sr, Ba, Bi, Ca, P, B et/ou du mischmétal ;
- impuretés : < 0.05 % individuellement, et au total < 0.15 % ;
- reste aluminium.

## Patentansprüche

1. Verfahren zur Herstellung eines Teils (20), das eine Bildung von aufeinanderfolgenden Metallschichten (20₁...20ₙ) beinhaltet, die sich überlagern, wobei jede Schicht durch Ablagerung eines Zusatzmetalls (15, 25) gebildet wird, wobei das Zusatzmetall einer Energiezufuhr unterzogen wird, so dass es zu schmelzen beginnt und durch Verfestigen die Schicht bildet, wobei das Verfahren **dadurch gekennzeichnet ist, dass** das Zusatzmetall (15, 25) eine Aluminiumlegierung ist, die kein Mn beinhaltet, außer gegebenenfalls im Zustand der Verunreinigung, und die folgenden Legierungselemente (Gew.-%) beinhaltend:
- Mg: 2.0%-5.0%;
- Zr: 0.5%-1.0%;
- Fe: 0.6%-3.0%;
- gegebenenfalls Zn: ≤0.5 %;
- gegebenenfalls Cu: ≤0.5 %;
- andere Legierungselemente, ≤4 % insgesamt und ≤1.0 % einzeln, wobei die anderen Legierungselemente ausgewählt sind aus: Cr, V, Ti, Mo, Ni, W, Nb, Ta, Sc, Hf, Nd, Ce, Co, La, Ag, Li, Y, Yb, Er, Sn, In, Si, Sb, Sr, Ba, Bi, Ca, P, B und/oder Mischmetall;
- Verunreinigungen: <0.05 % einzeln, und <0.15 % insgesamt;
- Restaluminium.

2. Verfahren nach einem der vorhergehenden Ansprüche, wobei Mg: 2.0 % - 3.5 % oder Mg: 2.0°/-3.0°/.

3. Verfahren nach einem der vorhergehenden Ansprüche, wobei Zr: 0.6 % - 1.0 % und vorzugsweise Zr: 0.7 % - 0.95 %.

4. Verfahren nach einem der vorhergehenden Ansprüche, wobei Fe: 0.8 % - 1.5 %.

5. Verfahren nach einem der vorhergehenden Ansprüche, kein Sc beinhaltend, außer gegebenenfalls im Zustand der Verunreinigung.

6. Verfahren nach einem der vorhergehenden Ansprüche, wobei der individuelle Massenanteil jedes anderen Legierungselements weniger als 500 ppm beträgt, sogar weniger als 300 ppm, sogar weniger als 200 ppm oder sogar weniger als 100 ppm.

7. Verfahren nach einem der vorhergehenden Ansprüche, nach der Bildung der Schichten (20₁...20ₙ) eine Anwendung einer Wärmebehandlung beinhaltend.

8. Verfahren nach Anspruch 7, wobei die Wärmebehandlung eine Entspannung oder ein Anlassen oder ein Glühen ist.

9. Verfahren nach einem der Ansprüche 7 oder 8, wobei die Wärmebehandlung bei einer Temperatur von 200 °C bis 500 °C durchgeführt wird.

10. Verfahren nach einem der vorhergehenden Ansprüche, keine Wärmebehandlung vom Abschreckungstyp nach der Bildung der Schichten beinhaltend.

11. Verfahren nach einem der vorhergehenden Ansprüche, wobei das Zusatzmetall die Form eines Pulvers (15) annimmt, dessen Aussetzen an einen Lichtstrahl (12) oder an geladene Partikel zu einer lokalisierten Schmelzung gefolgt von einer Verfestigung führt, so dass es eine feste Schicht (20₁...20ₙ) bildet.

12. Verfahren nach einem der Ansprüche 1 bis 10, wobei das Zusatzmetall aus einem Fülldraht (25) stammt, dessen Aussetzen an eine Wärmequelle (22) zu einer lokalisierten Schmelzung gefolgt von einer Verfestigung führt, so dass es eine feste Schicht (20₁...20ₙ) bildet.

13. Metallteil, das durch ein Verfahren nach einem der vorhergehenden Ansprüche erhalten wird, wobei die anderen Legierungselemente ausgewählt sind aus: Cr, V, Mo, Ni, W, Nb, Ta, Sc, Hf, Nd, Ce, Co, La, Ag, Li, Y, Yb, Er, Sn, In, Si, Sb, Sr, Ba, Bi, Ca, P, B und/oder Mischmetall.

14. Pulver, das zur Verwendung als Füllmaterial eines additiven Herstellungsverfahrens bestimmt ist, **dadurch gekennzeichnet, dass** es aus einer Aluminiumlegierung besteht, die kein Mn beinhaltet, außer gegebenenfalls im Zustand der Verunreinigung, und die folgenden Legierungselemente (Gew.-%) beinhaltend:
- Mg: 2.0%-5.0%;
- Zr: 0.5%-1.0%;
- Fe: 0.6%-3.0%;
- gegebenenfalls Zn: ≤0.5 %;
- gegebenenfalls Cu: ≤0.5 %;
- andere Legierungselemente, ≤4.0 % insgesamt und ≤1.0 % einzeln, wobei die anderen Legierungselemente ausgewählt sind aus: Cr, V, Mo, Ni, W, Nb, Ta, Sc, Hf, Nd, Ce, Co, La, Ag, Li, Y, Yb, Er, Sn, In, Si, Sb, Sr, Ba, Bi, Ca, P, B und/oder Mischmetall;
- Verunreinigungen: <0.05 % einzeln, und <0.15 % insgesamt;
- Restaluminium.

## Claims

1. Process for manufacturing a part (20) including a formation of successive metal layers (20₁...20ₙ), which are superimposed on each other, each layer being formed by depositing a filler metal (15, 25), the filler metal being subjected to a supply of energy so as to become molten and to constitute, upon solidifying, said layer, the process being **characterized in that** the filler metal (15, 25) is an aluminum alloy not including Mn, unless optionally in the impurity state, and including the following alloy elements (% by weight);
- Mg: 2.0% - 5.0%;
- Zr: 0.5% - 1.0%;
- Fe: 0.6% - 3.0%;
- optionally Zn: ≤ 0.5%;
- optionally Cu: ≤ 0.5%;
- other alloy elements, in total ≤ 4%, and individually ≤ 1.0%, the other alloy elements being chosen from: Cr, V, Ti, Mo, Ni, W, Nb, Ta, Sc, Hf, Nd, Ce, Co, La, Ag, Li, Y, Yb, Er, Sn, In, Si, Sb, Sr, Ba, Bi, Ca, P, B and/or mischmetal;
- impurities: < 0.05% individually, and in total < 0.15%;
- remainder aluminum.

2. Process according to any one of the preceding claims, wherein Mg: 2.0% - 3.5% or Mg: 2.0 % - 3.0 %.

3. Process according to any one of the preceding claims, wherein Zr: 0.6% -1.0% and preferably Zr: 0.7% - 0.95%

4. Process according to any one of the preceding claims, wherein Fe: 0.8% - 1.5%.

5. Process according to any one of the preceding claims, not including Sc, unless optionally in the impurity state.

6. Process according to any one of the preceding claims, wherein the individual mass fraction of each other alloy element is less than 500 ppm, or less than 300 ppm, or less than 200 ppm, or less than 100 ppm.

7. Process according to any one of the preceding claims, including, following the formation of the layers (20₁...20ₙ), an application of a thermal treatment.

8. Process according to claim 7, wherein the thermal treatment is a stress relief or an aging or an annealing.

9. Process according to any one of claims 7 or 8, wherein the thermal treatment is performed at a temperature from 200°C to 500°C.

10. Process according to any one of the preceding claims, not including a quenching type thermal treatment following the formation of the layers.

11. Process according to any one of the preceding claims, wherein the filler metal takes the form of a powder (15), the exposure of which to a light beam (12) or charged particles results in a localized melting followed by a solidification, so as to form a solid layer (20₁...20ₙ).

12. Process according to any one of claims 1 to 10, wherein the filler metal is obtained from a filler wire (25), the exposure of which to a heat source (22) results in a localized melting followed by a solidification, so as to form a solid layer (20₁...20ₙ).

13. Metal part obtained by a process according to any one of the preceding claims, wherein the other alloy elements are chosen from: Cr, V, Mo, Ni, W, Nb, Ta, Sc, Hf, Nd, Ce, Co, La, Ag, Li, Y, Yb, Er, Sn, In, Si, Sb, Sr, Ba, Bi, Ca, P, B and/or mischmetal.

14. Powder, intended to be used as a filler material of an additive manufacturing process, **characterized in that** it is formed from an aluminum alloy, not including Mn, unless optionally in the impurity state, and including the following alloy elements (% by weight):
- Mg: 2.0% - 5.0%;
- Zr: 0.5% - 1.0%;
- Fe: 0.6% - 3.0%;
- optionally Zn: ≤ 0.5%;
- optionally Cu: ≤ 0.5%;
- other alloy elements, in total ≤ 4.0 %, and individually ≤ 1.0%, the other alloy elements being chosen from: Cr, V, Mo, Ni, W, Nb, Ta, Sc, Hf, Nd, Ce, Co, La, Ag, Li, Y, Yb, Er, Sn, In, Si, Sb, Sr, Ba, Bi, Ca, P, B and/or mischmetal;
- impurities: < 0.05% individually, and in total < 0.15%;
- remainder aluminum.
